# EUROPÄISCHE PATENTSCHRIFT

(11) **EP 0 434 953 B1**
(45) Veröffentlichungstag und Bekanntmachung des Hinweises auf die Patenterteilung: **19.01.1994**
(21) Anmeldenummer: 90121695.2
(22) Anmeldetag: 13.11.1990
(51) Int. Cl.: H01M 4/04, H01M 4/26, H01M 4/88

(54) **Verfahren und Vorrichtung zum Vibrationsfüllen von Elektroden mit angeschweisster Stromableiterfahne in einem Pastenbad**
Process and device for filling by vibration in a pasting bath electrodes with a welded current collector flag
Procédé et dispositif pour la remplissage par vibration dans un bain d'empâtage d'électrodes avec un collecteur de courant soudé

(30) Priorität: 23.12.1989 DE 3942762
(43) Veröffentlichungstag der Anmeldung: 03.07.1991
(73) Patentinhaber: Deutsche Automobilgesellschaft mbH, 38114 Braunschweig (DE)
(72) Erfinder: Von Benda, Klaus, Dr., W-7440 Nürtingen (DE)

(56) Entgegenhaltungen:
- EP-A- 0 286 732
- EP-A- 0 341 492
- DE-C- 3 816 232
- DE-C- 3 822 281
- PATENT ABSTRACTS OF JAPAN vol. 14, no. 62 (E-0883)5. Februar 1990 & JP-A-1 281 669 ( YUASA BATTERY COMPANY ) 13. November 1989
- PATENT ABSTRACTS OF JAPAN vol. 11, no. 92 (E-491)24. März 1987 & JP-A-61 243 655 ( SHIN KOBE ELEC. MACH. CO. ) 29. Oktober 1986

## Beschreibung

Die Erfindung betrifft ein Verfahren und eine Vorrichtung zum Vibrationsfüllen von Elektroden mit angeschweißter Stromableiterfahne in einem Pastenbad. Die Erfindung findet vorzugsweise für das Vibrationsfüllen von Rundelektroden Verwendung, kann aber auch für Elektroden mit einer prismatischen Form benutzt werden.

Verfahren und Vorrichtungen zum vertikalen Vibrationsfüllen von Elektrodengerüsten mit einer Aktivmassenpaste gehören heute zum bekannten Stand der Technik, so z.B. nach der DE-PS 38 22 197, DE-PS 38 16 232 und DE-PS 38 22 209. Die Durchführung der darin beschriebenen Verfahren für Rundelektroden mit einer senkrecht zu der Elektrodenebene abgewinkelten Fahne ist jedoch problematisch, vor allem wenn die Fahne am Rande eines Mittelloches angeschweisst ist, wie das beim sog. pineapple slice design für Nickel/Wasserstoffzellen der Fall ist. Die Fahne soll vor der Füllung des Leergerüstes an diesem angeschweisst sein, aber bei der Füllung nicht hinderlich sein. Bei den in den obengenannten Schriften angegebenen Elektroden handelt es sich um normale, rechteckige Elektroden mit verhältnismäßig robusten Blechfahnen, die z.B. nach der DE-PS 31 42 091 und der DE-PS 36 32 351 an einem verstärkten Rand des Elektrodengerüstes angeschweisst sind und zur Halterung der Elektroden in der Fülleinrichtung dienen können.

Die Elektroden für Nickel/Wasserstoff-Zellen tragen dagegen lange Fahnen aus dünnem Nickelblech, die sich unter dem Gewicht der nassen Elektrode leicht verbiegen. Es ist daher üblich solche Rundelektroden vor dem Füllen mit Vorfahnen (sog. tabs) auszustatten, an denen nach dem Füllen die langen Stromableiterfahnen angeschweisst werden.

Diese Verfahrensweise bringt jedoch einige schwerwiegende Nachteile mit sich; es liegt ein zweimaliger Schweißvorgang vor - erst muß die Vorfahne angeschweißt werden, nach dem Füllen die Stromableiterfahne - , wobei die Vorfahne auch erst noch gereinigt werden muß, vor allem ist auch die Handhabung der gefüllten Elektrode schwierig, es besteht die Gefahr des Staubens und einer mechanischen Beschädigung der Elektrode. Auch ist es aus der Praxis bekannt, die gefüllte und getrocknete Elektrode vor dem Anschweißen der Fahne an die Vorfahne erst wieder naß zu machen, um ein Stauben des cancerogenen Nickelhydroxides zu verhindern. Damit ist ein zweiter, zusätzlicher Trockenvorgang der Elektrode notwendig.

Der Erfindung liegt die Aufgabe zugrunde, ein Verfahren und eine Vorrichtung zum Vibrationsfüllen des Faserstruktur - oder Schaumstoffstrukturgerüstes von Elektroden mit angeschweißter Stromableiterfahne zu schaffen, wobei die Gerüste in einem kontinuierlichen Arbeitsvorgang schnell und ohne großen Aufwand in einem Pastenbad gefüllt und anschließend von dem Überschuß an Paste leicht gereinigt werden können und ein gut reproduzierbares Füllen der Elektrodengerüste möglich ist.

Diese Aufgabe wird erfindungsgemäß bezüglich des Verfahrens mit den Merkmalen des Patentanspruches 1 und hinsichtlich der Vorrichtung mit den Merkmalen des Patentanspruches 7 gelöst.

Nach dem erfindungsgemäßen Verfahren ist eine Vibrationsfüllung der Elektroden mit bereits angeschweisster Fahne möglich, wenn die Fahne abknickend ungefähr im rechten Winkel zur Elektrodenfläche aus dem Pastenbad geführt und die Füllung in horizontaler Lage der Elektrode vorgenommen wird. Dazu wird die Elektrode bzw. zunächst das leere Gerüst in eine Halterung gespannt, die eine vertikale Drehachse und Halteorgane für das Gerüst besitzt, die den größten Teil der Gerüstfläche freilassen. Die Elektrode kann an ihrer Peripherie z.B. durch Krallen gehaltert werden; bei Elektroden mit Mittelloch oder anderen ausgebildeten Öffnungen können die Halteorgane in diese Öffnungen greifen.

Die Fahne findet Halt an der Achse des Haltewerkzeugs. Eine Fahne aus Nickel oder einem anderen ferromagnetischen Material wird zweckmäßig durch einen an der Achse angebrachten oder einen Teil der Achse bildenden Permanent- oder Elektromagneten gehalten. Der Elektromagnet kann zum Lösen der Fahne ausgeschaltet werden. Andere Haltemittel für die Fahne sind Klemmen, Haken, Bügel oder aufblasbare Dehnkörper; gleichgültig, ob nun festfixierende oder nur lose sichernde Haltemittel gewählt werden, sollten sie im oberen Drittel der Fahnenlänge wirken, damit ein weiterer Schritt des erfindungsgemäßen Verfahrens möglich ist, nämlich das Reinigen der gefüllten Elektroden durch Abschleudern des Pastenüberschusses. Dazu wird das Haltewerkzeug mit dem Elektrodengerüst nach dem Füllvorgang aus dem Pastenbad wieder herausgefahren und mittels der vertikalen Achse gedreht.

Zweckmäßigerweise erfolgt das durch einen rechnergesteuerten Automaten, der auch das Haltewerkzeug und damit die Elektrode auf eine Drehzahl bringt, die genügt, die Elektrode zu reinigen, aber nicht zum Pastenverlust aus dem Inneren der Elektrode führt. Dabei verhindert die vorher beschriebene Fahnenhalterung ein Abknicken der Fahne unter dem Einfluß der Zentrifugalkraft beim Schleudern.

Gefüllte Elektroden sind in der Regel schwerer als Katalysatorelektroden, die nur eine mehr oder weniger dünne Katalysatorschicht tragen. Das gilt besonders für Faser- und Schaumstrukturelektroden, die dicker als Sinterfolienelektroden ausgeführt werden können und damit besonders hohe Kapazitäten pro Flächeneinheit annehmen können. Beim Ausfahren der gefüllten Elektrode aus der Paste ist das Elektrodengewicht zunächst noch durch die anhaftende, abzuschleudernde überschüssige Paste erhöht, so daß es je nach Elektrodengröße und Zähigkeit der Paste einer erheblichen Motorleistung für den Schleudervorgang bedarf.

Um für das Schleudern mit kleinen Motoren, insbesondere mit Schrittmotoren kleiner Leistung auszukommen, wird das Abschleudern mit wenigstens zwei Drehzahlen vorgenommen, von denen die kleinere Drehzahl so ausgelegt ist, daß wenigstens 30% des Pastenüberschusses entfernt werden, nach Möglichkeit noch mehr. Die höchste Drehzahl dient dann der Entfernung der fester haftenden überschüssigen Oberflächenschicht. Das Vorreinigen durch Vor-Schleudern hat auch den Vorteil, daß ein Großteil des Pastenüberschusses bei richtiger Abstimmung von Drehzahl, Pastentopfdurchmesser und Pastenzähigkeit direkt in das Pastenbad zurückfliesst, weil die Zentrifugalkraft nicht ausreicht, die Paste an die Topfwand zu schleudern. Die ausschließliche Rückführung einer relativ zähen Paste über die Topfwand birgt die Gefahr des Eintrocknens und der Krustenbildung an der Topfwand in sich. Um diese Gefahr zu verringern, kann dem Pastentopf ein Deckel aufgesetzt werden, dessen Öffnung gerade das Einfahren des Gerüstes erlaubt, während der Topfinnendurchmesser in Höhe der Schleuderzone größer gehalten ist, um ein Abfliessen der Überschusspaste beim Vor-Schleudern ohne Wandkontakt zu gestatten.
Die horizontale Vibrationsfüllung, d.h. die Füllung eines mit der Fläche horizontal und Parallel zum Pastentopfboden angeordneten Elektrodengerüstes, kommt mit sehr kleinen Pastenmengen aus, wobei das zu füllende Gerüst möglichst flach in die Paste tauchen soll, um die Verschmutzung von Fahne und Haltewerkzeug gering zu halten. Wegen der kleinen Pastenmenge kann der gesamte Pastentopf auf einem Vibrator befestigt und vibriert werden. Der Pastentopf ist hoch genug auszuführen, um Platz für das Abschleudern des Pastenüberschusses nach erfolgter Imprägnierung des Gerüstes zu schaffen. Ein konstantes Pastenniveau kann durch eine Dosiereinrichtung geschaffen werden, die von dem Imprägnierautomaten so gesteuert wird, daß nach jeder Füllung eine entsprechende Pastenmenge in dem Pastentopf wieder nachgefüllt wird. Der Durchmesser des Pastentopfes soll im eigentlichen Pastenbad-Abschnitt den Elektrodendurchmesser wenig überschreiten, um die Pastenmenge klein zu halten. Der Durchmesser des Pastenbehälters in dem oberhalb des Pastenbades gelegenen Bereich ist normalerweise größer als der Durchmesser in dem unteren Bereich, wo das Pastenbad vorhanden ist. Zu der Öffnung des Behälters kann sich dann der Durchmesser wieder verringern. Die Form des Behälters kann also mehr oder minder von der Zylinderform abweichen und sogar Kugelform annehmen. Für nichtrunde Elektroden sind auch eckige Pastentöpfe in Betracht zu ziehen.

Das Ein- und Austauchen der zu pastierenden Elektrode sollte so langsam geschehen, daß Deformationen der Elektrodenfläche vermieden werden; außerhalb des Pastenbades empfiehlt sich wegen der Zeitersparnis eine höhere Geschwindigkeit.

Erfindungsgemäß läßt sich eine wesentliche Verbesserung der Füllung der Elektrode durch die Installation eines Reflexionskörpers oberhalb der Elektrode schaffen, der beim Füllen mit in das Pastenbad taucht. Der Reflexionskörper ist ein starrer Körper, in der einfachsten und bevorzugten Ausführung eine elektrodenparallele Platte, an dem die vom Topfboden ausgehenden Schwingungen reflektiert werden. Dadurch kommt es zu einer verstärkten Fluidisierung der Paste im Schwingungsfeld und damit zu einer rascheren und vollständigeren Füllung des Elektrodengerüstes. Der Reflektor kann Bestandteil des Elektrodenhaltewerkzeugs sein, bzw. an diesem befestigt sein. Er kann aber auch im Prinzip ein gesonderter Teil der Apparatur sein und durch gesonderte Hilfsmittel positioniert werden. Bevorzugt wird die Anbringung des Reflektors am Haltewerkzeug. Damit erreicht man eine gleichzeitige Reinigung von Elektrode und Reflektorplatte beim Abschleudern und vermeidet apparativen Aufwand zur reproduzierbaren Positionierung des Reflektors.

Der Reflektor sollte in diesem Falle nicht nur starr, sondern auch leicht sein; seine Oberfläche sollte hydrophob sein. Alle diese Eigenschaften bietet eine Kunststoffplatte, z.B. aus Polystyrol. Die Form der Platte soll etwa der der Elektrodenform entsprechen; im Fall der angesprochenen Rundelektroden mit Mittelloch ist eine ebenso geformte Reflektorplatte nützlich. Zur Durchführung der oben erwähnten abknickenden Fahne besitzt der Reflektor eine Öffnung, im einfachsten Fall einen Schlitz, der bis zum Plattenrande geht.
Es versteht sich von selbst, daß die Forderung nach Starrheit des Reflektors keine absolute sein kann, da auch elastische Körper z.B. aus Federstahlblech eine Reflexion der vom Topfboden ausgehenden Stosswellen bewirken können, jedoch unter Energieverlust. Das Verfahren ist daher mit eingeschränkter Qualität auch mit nichtstarren Reflektoren durchführbar; die Bezeichnung "starr" soll hier nur bedeuten, daß unter der Vibration keine wesentliche Deformation des Reflektors auftritt.

Bei der Vibrationsfüllung entweicht aus dem Elektrodengerüst Luft. Diese Luft steigt im Pastenbad nach oben und muß möglichst schnell abgeführt werden, da sie eine beträchtliche Schwingungsdämpfung bewirkt. Zur schnellen Entlüftung der Paste in dem Raum zwischen Elektrodengerüst und Reflektor kann der Reflektor zusätzlich zu der für die Fahnendurchführung bestimmten Öffnung mit weiteren Öffnungen versehen werden, z.B. als Lochplatte ausgeführt werden.

Diese Maßnahme verschlechtert jedoch u.U. die Reflexionseigenschaften des Reflektors. Die konkrete Ausführung des Reflexionskörpers muß daher im Einzelfalle den Systemeigenschaften angepaßt werden, die durch das Schwingungsspektrum und die viskoelastischen Eigenschaften der Paste sowie durch die Geometrie der Anordnung im Pastentopf bestimmt werden.

Der Abstand des Reflektors vom Elektrodengerüst wird von den Notwendigkeiten der raschen Entgasung der Paste und der Säuberung von Elektrode und Reflektor durch das Abschleudern bestimmt. Beim Abschleudern muß die (nicht mehr durch Vibration fluidisierte) Paste den Spalt zwischen Elektrode und Reflektor einwandfrei verlassen und an die Topfwand geschleudert werden können. In der Praxis hat sich ein Abstand von 1 bis 14, insbesondere von 4 bis 12 mm bewährt.

Zuweilen kann es nützlich sein, den Reflektor mit Stegen, Rippen, Stiften oder anderen Oberflächenausführungen zu versehen, die als Distanzhalter zur Elektrode dienen und diese an ihrer Oberfläche berühren können. Bevorzugt werden dafür radial verlaufende Rippen. Auf jeden Fall ist bei der Ausführung solcher, die Elektrode mit Vorsprüngen berührender Reflektoren darauf zu achten, daß ein möglichst großer Teil der Elektrodenoberfläche unberührt bleibt. Derart gestaltete Reflektoren können zur Halterung des Gerüstes bzw. der Elektrode mitverwendet werden, indem sie ein Widerlager zur Einspannung der Elektrode bilden; sie können umgekehrt auch die Elektrode als Widerlager zur Abstützung z.B. einer klappbaren Reflektorausführung nutzen.

Zur rascheren Entgasung und besseren Verteilung der Luftblasen hat es sich als vorteilhaft erwiesen, die Elektrode während der Imprägnierung einer Oszillation um die vertikale Achse zu unterwerfen. Dazu wird zweckmäßig der Rotationsantrieb für das Abschleudern genutzt. Der Antrieb sollte also Oszillationsbewegungen ermöglichen; geeignet ist z.B. ein Schrittmotor. Der Oszillationswinkel braucht 30° nicht zu übersteigen; die Frequenz sollte über 5 Hz liegen.

Obwohl die Füllung von Gerüsten in einem weiten Bereich von Frequenzen und Amplituden für den Pastenbehälter möglich ist (40 bis 125 Hz und 0,1 bis 1,5 mm), empfiehlt sich für die horizontale Imprägnierung nach dem erfindungsgemäßen Verfahren zur Vermeidung von Spritzern, eine Amplitude von 0,2 mm nicht zu überschreiten und die Spitzenfrequenz auf wenigstens 100 Hz zu legen. Mit Spitzenfrequenz ist hier die höchste während des Vibrationszyklus auftretende Frequenz gemeint.

Die Erfindung läßt sich auch auf das Füllen von gewöhnlichen, viereckigen Elektroden mit einer Außenrandfahne übertragen, wenn deren Fahnenlänge nicht prohibitiv groß ist. Das gilt im allgemeinen für Elektroden von gasdichten Zellen, z.B. von gasdichten Ni/Cd-Zellen mit prismatischem Gehäuse. In diesem Falle ist keine aufwendige Säuberung der Fahne nötig, da die Fahne, wenn auch in die Paste getaucht, beim Schleudern der Elektrode durch die Zentrifugalkraft gesäubert wird. Da die viereckigen Elektroden beträchtlich größer als die herkömmlichen Rundelektroden sein können, empfiehlt sich unter Umständen, die Reflexionsplatte nicht mehr am Haltewerkzeug zu befestigen, sondern getrennt zu lokalisieren und nach Einfahren des Gerüstes in die Paste über dem Gerüst anzuordnen. Eine Möglichkeit dazu besteht darin, die Reflexionsplatte als Klappteil zu gestalten, das beim Einfahren des Gerüstes in das Pastenbad und beim Herausfahren aus dem Pastenbad hochgeklappt wird. Dies hat auch den Vorteil, daß die abgeschleuderte Paste von der hochgeklappten Platte aufgefangen und beim nächsten Füllzyklus in das Pastenbad gebracht wird. In der Ausführung als Klapp- oder Faltteil kann die Reflexionsplatte auch geteilt sein.

Die Erfindung soll in den folgenden Beispielen noch näher beschrieben werden.

### Beispiel 1:

Eine Apparatur zur Füllung von positiven Rundelektroden von 86 mm Durchmesser mit einem Mittelloch von 20 mm mit Nickelhydroxidpaste besteht aus einem dreiachsigen Linearroboter mit Rechnersteuerung, einem Tisch mit einem rechnergesteuerten Vibrator und einem darauf befestigten Pastentopf, sowie einer rechnergesteuerten Dosiervorrichtung mit Pastenvorrat. Der zylindrische Pastenbehälter ist ein Plastikgefäß von 0,75 l Inhalt und 8 cm Höhe, er wird ca. 2 cm hoch mit Paste gefüllt. Der Elektrodenhalter ist mit seiner Drehachse in den zur Rotation dienenden z-Antrieb des Roboters eingespannt, der von einem Y-Antrieb auf und nieder bewegt werden kann; der x-Antrieb dient zur Translation der y- und z-Achsen über den Pastentopf. Der Elektrodenhalter trägt auf seiner Achse Magnete für die Fahnenhalterung sowie ein federgespanntes Greiforgan, mit dem er durch das Mittelloch der Elektrode greift und die Elektrode fixiert. Im Abstand von 7 mm oberhalb der Elektrode trägt der Halter eine Platte aus Polystyrol mit Schlitz für das Einführen bzw. Herausnehmen des Gerüstes bzw. der Elektrode. Die Platte hat die Dimensionen der Elektrode und besitzt in der Mitte drei zur Elektrode gerichtete Rippen, gegen die die Elektrode durch das Greiforgan gezogen wird. Zur Imprägnierung wird das Elektrodengerüst mit daran angeschweisster Fahne vom Haltewerkzeug ergriffen, so daß sich die Fahne an den Haltemagneten legt, und das Werkzeug samt Gerüst über den Pastentopf bewegt. Dann wird das Haltewerkzeug samt Gerüst schnell bis 3 cm über die Paste abgesenkt und langsam mit 1/10 der vorigen Geschwindigkeit so weit in die Paste gefahren, daß der Reflektor 2 mm hoch von Paste bedeckt ist. Anschließend wird der Vibrator mit 100 Hz und einer Amplitude von 0,13 mm in Gang gesetzt. Nach 20 Sekunden wird die Vibration gestoppt, das Haltewerkzeug mit der Elektrode und dem Reflexionskörper aus dem Pastenbad herausgefahren, bis das gefüllte Elektrodengerüst sich ungefähr 3 cm über der Pastenoberfläche befindet. Anschließend läßt man die z-Achse des Linearroboters mit 1 000 UPM rotieren. In wenigen Sekunden sind Elektrode und Reflexionskörper gereinigt; der abgeschleuderte Pastenüberschuß läuft von der Behälterwand in das Pastenbad zurück. Danach wird das Haltewerkzeug samt Elektrode gänzlich aus dem Topf gehoben, seitlich verfahren und die Elektrode auf ein Trockengestell gesetzt.

### Beispiel 2:

Mit einer wie in Beispiel 1 angegebenen Apparatur wird Cadmiumoxidpaste in ein viereckiges Elektrodengerüst - ohne Mittelloch - gefüllt, wobei das Gerüst eine kurze Fahne trägt. Das Haltewerkzeug hält die Gerüstplatte an den Kanten. Ein Reflexionskörper ist beim Haltewerkzeug nicht vorhanden. Dafür befinden sich an der Wand des sechseckigen Pastenbehälters um einen Winkel von 90° schwenkbare Blechsegmente, die nach dem Einfahren der Elektrode in das Pastenbad diese in einem Abstand von 6 mm als Reflexionsplatte abdecken. In der gebildeten Abdeckung ist ein freies Mittelloch für die Durchführung der Achse für das Haltewerkzeug vorhanden. Nach einer Füllzeit von 10 Sekunden wird die Vibration abgestellt und vor dem Herausfahren des Haltewerkzeuges mit dem Gerüst aus dem Pastenbad die Blechsegmente an die Wand des Pastenbehälters zurückgeklappt, so daß sie während des nachfolgenden Schleudervorganges den in Richtung der Behälterwand von dem Gerüst abgeschleuderten Pastenüberschuß abfangen. Die Reinigung der Elektrode wird zweistufig mit zunächst 300 und anschließend mit 1 000 UPM vorgenommen. Dabei wird auch die kurze Fahne weitgehend gereinigt. Im Gegensatz zu der Elektrode im Beispiel 1 ist diese kurze Fahne an der Außenkante der Elektrode angebracht, so daß beim Schleudervorgang beträchtliche Zentrifugalkräfte auf sie einwirken.

Die Vorteile des erfindungsgemäßen Verfahrens und der Vorrichtung bestehen insbesondere darin, daß beim Vibrationsfüllen von Faserstruktur - oder Schaumstrukturgerüsten von Elektroden, bei denen eine Stromableiterfahne angeschweißt ist, die Gerüste in einem kontinuierlichen Arbeitsvorgang in einem Pastenbad schnell und ohne großen Aufwand gefüllt und anschließend von dem Überschuß an Aktivmassenpaste leicht gereinigt werden können. Das Verfahren wird automatisch in einer Apparatur durchgeführt, so daß sehr wenig Handarbeit anfällt, wodurch sehr hohe Stückzahlen verarbeitbar sind und die Herstellung insgesamt billig, wirtschaftlich und umweltfreundlich ist. Außerdem ergibt sich eine sehr gute reproduzierbare Qualität der Füllungen der Elektrodengerüste.

## Patentansprüche

1. Verfahren zum Vibrationsfüllen von Faserstruktur- und Schaumstrukturgerüsten von Elektroden mit angeschweißter Stromableiterfahne in einem Pastenbad, wobei das Gerüst horizontal in ein Pastenbad eingetaucht wird,
**dadurch gekennzeichnet,**
daß das Gerüst an einem Haltewerkzeug, das mit einer vertikalen Drehachse verbunden ist, befestigt wird,
daß das Haltewerkzeug mit dem Gerüst soweit in Richtung auf das Pastenbad abgesenkt wird, bis das Gerüst auch oberseitig völlig von der Paste bedeckt ist,
daß oberhalb des Gerüstes in einem definierten Abstand und parallel zu dem Gerüst, aber noch unterhalb der Pastenbad-Oberfläche, ein Reflexionskörper für die von dem Boden des Pastenbadbehälters abgestrahlten Vibrationen angebracht wird, nach erfolgter Vibrationsfüllung sowohl das Haltewerkzeug mit dem gefüllten Gerüst als auch der Reflexionskörper aus dem Pastenbad zurückgefahren wird und darauf noch innerhalb des Pastenbehälters aber oberhalb der Pastenoberfläche durch Rotation der vertikalen Drehachse, an der das Haltewerkzeug angebracht ist, von dem Gerüst der Überschuß an Paste abgeschleudert und gleichzeitig der Reflexionskörper von überschüssiger Paste gereinigt wird.

2. Verfahren nach Anspruch 1,
**dadurch gekennzeichnet,**
daß der an dem Haltewerkzeug befestigte Reflexionskörper in seinen Dimensionen ungefähr den Abmessungen des Elektrodengerüstes entspricht und in einem Abstand von 1 bis 14 mm oberhalb des Elektrodengerüstes angeordnet wird und gleichzeitig mit dem Elektrodengerüst durch Schleudern gereinigt wird.

3. Verfahren nach Anspruch 1 oder 2,
**dadurch gekennzeichnet,**
daß das Abschleudern des Überschusses an Paste von dem Elektrodengerüst zuerst mit einer niedrigen und anschließend mit einer hohen Drehzahl der vertikalen Drehachse vorgenommen wird.

4. Verfahren nach Anspruch 3,
**dadurch gekennzeichnet,**
daß bei der niedrigen Drehzahl der vertikalen Drehachse mindestens 30% des Pastenüberschusses von dem Elektrodengerüst abgeschleudert werden.

5. Verfahren nach einem oder mehreren der Ansprüche 1 bis 4,
**dadurch gekennzeichnet,**
daß in dem Pastenbehälter das Volumen der Paste durch ein automatisches Nachfüllen immer konstant gehalten wird.

6. Verfahren nach einem oder mehreren der Ansprüche 1 bis 5,
**dadurch gekennzeichnet,**
daß der Pastenbehälter maximal auf 70% seiner ausnutzbaren Füllhöhe gefüllt wird.

7. Vorrichtung zum Vibrationsfüllen von Faserstruktur- und Schaumstoffgerüsten von Elektroden mit angeschweißter Stromableiterfahne in einem Pastenbad, wobei das Gerüst horizontal gehalten ist,
**dadurch gekennzeichnet**,
daß oberhalb des Pastenbehälters eine vertikale und in Vertikalrichtung auf und absenkbare Drehachse mit einem Haltewerkzeug für das Gerüst vorgesehen ist, an dem oberhalb des Gerüstes in einem definiertem Abstand und parallel zu dem aufgenommenen Gerüst ein Reflexionskörper für bodenseitig abgestrahlte Vibrationen angeordnet ist.

8. Vorrichtung nach Anspruch 7,
**dadurch gekennzeichnet,**
daß der Reflexionskörper eine Platte ist, deren Dimensionen ungefähr den Abmessungen des Elektrodengerüstes entsprechen und daß diese in einem Abstand von 1 bis 14 mm oberhalb des Elektrodengerüstes angeordnet ist.

9. Vorrichtung nach Anspruch 7 oder 8,
**dadurch gekennzeichnet**,
daß das an der Drehachse angeordnete Haltewerkzeug eine Befestigungseinrichtung für die an der Elektrode angeschweißte Fahne besitzt, wodurch eine Deformation der Fahne bei der Rotation verhindert wird.

10. Vorrichtung nach Anspruch 9,
**dadurch gekennzeichnet,**
daß als Befestigungseinrichtung ein Magnet vorhanden ist.

11. Vorrichtung nach Anspruch 8,
**dadurch gekennzeichnet,**
daß der Reflexionskörper nicht am Haltewerkzeug befestigt ist sondern über eine eigene, zusätzliche Halteeinrichtung mit der vertikalen Drehachse verbunden ist und klapp- oder faltbar ausgeführt ist.

12. Vorrichtung nach einem oder mehreren der Ansprüche 7 bis 11,
**dadurch gekennzeichnet,**
daß der Reflexionskörper in der Mitte geteilt ist.

13. Vorrichtung nach einem oder mehreren der Ansprüche 8 bis 12,
**dadurch gekennzeichnet,**
daß der Reflexionskörper eine schlitzartige Öffnung für das Durchführen der Elektrodenfahne besitzt.

14. Vorrichtung nach einem oder mehreren der Ansprüche 8 bis 13,
**dadurch gekennzeichnet,**
daß die schlitzartige Öffnung bis zum Rande des Reflexionskörpers reicht und eine Abdeckung besitzen kann.

15. Vorrichtung nach einem oder mehreren der Ansprüche 8 bis 14,
**dadurch gekennzeichnet,**
daß der Durchmesser des Pastenbehälters, in dem Teil, in dem er die Paste enthält, kleiner ist als in dem über der Pastenoberfläche befindlichen Teil.

## Claims

1. Method for vibration-filling fibrous structure and expanded structure frameworks of electrodes having welded-on current drain lug in a paste bath, the framework being horizontally immersed in a paste bath, characterised in that the framework is attached to a holding tool which is connected to a vertical rotary shaft, in that the holding tool with the framework is lowered in the direction of the paste bath to such an extent that the framework is fully covered by the paste even on the top side, and in that a reflection body for the vibrations radiated from the base of the paste bath container is provided at a defined distance above the framework and parallel to the framework, but still beneath the paste bath surface, both the holding tool with the filled framework and the reflection body are withdrawn from the paste bath after vibration-filling has been carried out and then, still inside the paste container but above the surface of the paste, the excess of paste is spun off the framework by rotation of the vertical rotary shaft on which the holding tool is mounted and at the same time the reflection body is cleaned of excess paste.

2. Method according to Claim 1, characterised in that the reflection body mounted on the holding tool corresponds in its dimensions approximately to the dimensions of the electrode framework and is arranged at a distance of 1 to 14 mm above the electrode framework and is cleaned by spinning simultaneously with the electrode framework.

3. Method according to Claim 1 or 2, characterised in that the spinning-off of the excess paste from the electrode framework is carried out first at a low and then at a high rotary speed of the vertical rotary shaft.

4. Method according to Claim 3, characterised in that at least 30% of the excess paste is spun off the electrode framework at the low rotary speed of the vertical rotary shaft.

5. Method according to one or more of Claims 1 to 4, characterised in that the volume of paste in the paste container is always kept constant by an automatic topping-up.

6. Method according to one or more of Claims 1 to 5, characterised in that the paste container is filled as a maximum to 70% of its utilisable filling depth.

7. Appliance for vibration-filling fibrous structure and expanded structure frameworks of electrodes having welded-on current drain lug in a paste bath, the framework being held horizontally, characterised in that there is provided above the paste container a vertical rotary shaft capable of being raised and lowered in the vertical direction and having a holding tool for the framework on which a reflection body for vibrations radiated from the base side is arranged above the framework and at a defined distance from and parallel to the framework picked up.

8. Appliance according to Claim 7, characterised in that the reflection body is a plate whose dimensions correspond approximately to the dimensions of the electrode framework, and in that it is arranged at a distance of 1 to 14 mm above the electrode framework.

9. Appliance according to Claim 7 or 8, characterised in that the holding tool mounted on the rotary shaft has a fixing device for the lug welded on to the electrode, as a result of which deformation of the lug is prevented during rotation.

10. Appliance according to Claim 9, characterised in that a magnet is present as fixing device.

11. Appliance according to Claim 8, characterised in that the reflection body is not mounted on the holding tool but is connected via its own additional holding device to the vertical rotary shaft and is of hinged or foldable construction.

12. Appliance according to one or more of Claims 7 to 11, characterised in that the reflection body is divided in the centre.

13. Appliance according to one or more of Claims 8 to 12, characterised in that the reflection body has a slot-type opening for feeding through the electrode lug.

14. Appliance according to one or more of Claims 8 to 13, characterised in that the slot-type opening extends to the edge of the reflection body and may have a covering.

15. Appliance according to one or more of Claims 8 to 14, characterised in that the diameter of the paste container is smaller in the part which contains the paste than in the part located above the paste surface.

## Revendications

1. Procédé pour remplir, moyennant l'application de vibrations, des ossatures, formées par une structure de fibres et une structure en mousse, d'électrodes, auquel est soudée une languette de prélèvement de courant, dans un bain de pâte, l'ossature étant immergée horizontalement dans un bain de pâte,
caractérisé en ce
qu'on fixe l'ossature à un outil de retenue, qui est raccordé à un arbre rotatif vertical,
qu'on abaisse l'outil de retenue équipé de l'ossature en direction du bain de pâte jusqu'à ce que l'ossature soit également entièrement recouverte, à sa partie supérieure, par la pâte,
qu'au-dessus de l'ossature et à une distance définie et parallèlement à cette dernière, mais encore au-dessous de la surface du bain de pâte, on dispose un corps réflecteur pour les vibrations émises par le fond du récipient contenant le bain de pâte, qu'une fois exécuté le remplissage moyennant l'application de vibrations, on rétracte aussi bien l'outil de retenue équipé de l'ossature remplie que le corps réflecteur hors du bain de pâte et qu'ensuite on élimine de l'ossature l'excès de pâte par centrifugation, encore à l'intérieur du récipient contenant la pâte, mais au-dessus de la surface de la pâte, par rotation de l'axe vertical de rotation, sur lequel est monté l'outil de retenue, et qu'on élimine simultanément la pâte en excès du corps réflecteur.

2. Procédé selon la revendication 1, caractérisé en ce que le corps réflecteur fixé sur l'outil de retenue a des dimensions qui correspondent approximativement aux dimensions de l'ossature d'électrode et est disposé à une distance de 1 à 14 mm au-dessus de l'ossature d'électrode et est nettoyé en même temps que l'ossature d'électrode par centrifugation.

3. Procédé selon la revendication 1 ou 2, caractérisé en ce que l'élimination par centrifugation de l'extrait de pâte de l'ossature d'électrode est réalisée tout d'abord avec une faible vitesse de rotation, puis avec une vitesse de rotation élevée de l'axe de rotation vertical.

4. Procédé selon la revendication 3, caractérisé par le fait que, dans le cas d'une faible vitesse de rotation de l'axe de rotation vertical, on élimine par centrifugation au moins 30 % de l'excès de pâte de l'ossature d'électrode.

5. Procédé selon une ou plusieurs des revendications 1 à 4, caractérisé en ce que dans le récipient contenant la pâte, le volume de cette dernière est toujours maintenu constant au moyen d'un remplissage complémentaire automatique.

6. Procédé selon une ou plusieurs des revendications 1 à 5, caractérisé en ce qu'on remplit le récipient à pâte au maximum à 70 % de sa hauteur de remplissage utilisable.

7. Procédé pour remplir, moyennant l'application de vibrations, des ossatures, formées par une structure de fibres et une structure en mousse, d'électrodes, auquel est soudée une languette de prélèvement de courant, dans un bain de pâte, l'ossature étant maintenue horizontale dans un bain de pâte,
caractérisé en ce qu'au-dessus du récipient contenant la pâte il est prévu un axe rotatif vertical, qui peut être soulevé et abaissé dans la direction verticale et comporte un outil de retenue pour l'ossature et sur lequel un corps réflecteur pour des vibrations émises à partir du fond est disposé au-dessous de l'ossature à une distance définie de cette dernière et parallèlement à l'ossature supportée.

8. Dispositif selon la revendication 7, caractérisé en ce que le corps réflecteur est une plaque, dont les dimensions correspondent approximativement aux dimensions de l'ossature d'électrode et que cette plaque est disposée à une distance de 1 à 14 mm au-dessus de l'ossature d'électrode.

9. Dispositif selon la revendication 7 ou 8, caractérisé en ce que l'outil disposé sur l'axe de rotation possède un dispositif de fixation pour la languette soudée à l'électrode, ce qui empêche une déformation de la languette lors de la rotation.

10. Dispositif selon la revendication 9, caractérisé en ce qu'un élément est prévu en tant que dispositif de fixation.

11. Dispositif selon la revendication 8, caractérisé en ce que le corps réflecteur n'est pas fixé à l'outil de retenue, mais est raccordé, par l'intermédiaire d'un dispositif particulier supplémentaire de retenue, à l'axe de rotation vertical et est agencé de manière à être rabattable ou repliable.

12. Dispositif selon une ou plusieurs des revendications 7 à 11, caractérisé en ce que le corps réflecteur est divisé en son milieu.

13. Dispositif selon une ou plusieurs des revendications 8 à 12, caractérisé en ce que le corps réflecteur possède une ouverture en forme de fente pour le passage de la languette de l'électrode.

14. Dispositif selon une ou plusieurs des revendications 8 à 13, caractérisé en ce que l'ouverture en forme de fente s'étend jusqu'au bord du corps réflecteur et peut comporter un couvercle.

15. Dispositif selon une ou plusieurs des revendications 8 à 14, caractérisé en ce que le diamètre du récipient contenant la pâte est inférieur, dans sa partie qui contient la pâte, au diamètre de la partie située au-dessus de la surface de la pâte.
